# EUROPÄISCHE PATENTANMELDUNG

(11) **EP 2 618 036 A2**
(43) Veröffentlichungstag der Anmeldung: **24.07.2013**
(21) Anmeldenummer: 13401003.2
(22) Anmeldetag: 14.01.2013
(51) Int. Cl.: F16L 37/32, F16L 55/027

(54) **Schnellverbinbungskupplung für Hydraulikleitungen**

(30) Priorität: 19.01.2012 DE 102012100401
(71) Anmelder: Amazonen-Werke H. Dreyer GmbH & Co. KG, 49205 Hasbergen (DE)
(72) Erfinder: Oberheide, Friedrich, 49143 Bissendorf (DE); Welk, Markus, 33775 Versmold (DE)

(57) **Zusammenfassung**

Schnellverbindungskupplung für Hydraulikleitungen für die Übertragung von unter Druck stehenden flüssigen Fluiden, wobei die Steckverbindungskupplung zum lösbaren Verbinden von Hydraulikleitungen jeweils einen Stecker (1) und eine Muffe, die miteinander zu kuppeln sind, aufweist, wobei der Stecker (1) und die Muffe jeweils ein die Leitungen (4) verschließende federbelastetes Ventilelement (6) aufweisen, wobei in dem Stecker (1) in dessen Hydraulikleitung (4) ein Filterelement (9) angeordnet ist, wobei das Filterelement (9) rückschlagventilartig in der Hydraulikleitung (4) des Steckers (1) angeordnet ist.

## Beschreibung

Die Erfindung betrifft gemäß des Oberbegriffes des Patentanspruches 1 eine Schnellverbindungskupplung für Hydraulikleitungen.

Eine derartige Schnellverbindungskupplung für Hydraulikleitungen ist in der Praxis bekannt geworden. Derartige Schnellverbindungskupplungen sind so genannte Schnellverschlusskupplungen mit beidseitig absperrenden Steckkupplungen mit einer Kugelverriegelung. Die Ventile in Muffe und Stecker öffnen bzw. schließen sich beim Kupplungsvorgang automatisch. Sie werden häufig auch mit der Kurzbezeichnung SVK bezeichnet. Bei der in der Praxis bekannt gewordenen Abwandlung von Steckern der Schnellverbindungskupplungen ist in dem Stecker in dessen Hydraulikleitung ein Filterelement, welches mittels einer Gewindeverbindung in die Hydraulikleitung eingeschraubt ist, angeordnet, welches von dem durch die Hydraulikleitung strömenden Fluide in beiden Richtungen durchströmt wird.

Derartige Schnellverbindungskupplungen werden häufig in der Landmaschinentechnik eingesetzt, um Hydraulikleitungen von an einem Ackerschlepper angekoppelten Gerät mit der Hydraulikanlage des Ackerschleppers zu verbinden. An dem Schlepper sind die Muffen der Schnellverbindungskupplungen angeordnet, während die Hydraulikleitungen des Gerätes die Stecker der Schnellverbindungskupplungen aufweisen. Durch das Filter in der Hydraulikleitung des Steckers soll erreicht werden, dass sich in den Fluiden, die von der Schlepperhydraulikanlage zum Gerät strömen, enthaltenen Schmutzpartikel nicht zur Geräteseite gelangen können. Problematisch ist jedoch bei der bekannten Anordnung, dass sich auf der Geräteseite in den Fluiden enthaltene Schmutzpartikel in dem Gerätehydraulikkreislauf bleiben und nicht heraus gelangen können.

Der Erfindung liegt die Aufgabe zu Grunde, eine einfache Ausgestaltung einer Schnellverbindungskupplung mit einem Filterelement vorzuschlagen, bei welchem es möglich ist, dass das Filter nur in der Strömungsrichtung der Fluide vom Schlepper in Richtung Gerät wirksam ist.

Diese Aufgabe wird erfindungsgemäß dadurch gelöst, dass das Filterelement rückschlagventilartig in der Hydraulikleitung des Steckers angeordnet ist.

Infolge dieser Maßnahme ist die Grundvoraussetzung dafür geschaffen, dass das Filterelement nur in einer Strömungsrichtung der die Hydraulikleitungen durch strömenden Fluide wirksam ist. Hierdurch können die strömenden Fluide in einer Richtung das Filterelement aus seinem Ventilsitz abheben und an dem Filterelement ohne das Filterelement zu durchströmen vorbeiströmen, so dass auch in den Fluiden enthaltene Schmutzpartikel an dem Filter vorbeigelangen können. Hierdurch wird erreicht, dass bei häufigem Hin- und Herströmen der Fluide die Fluide in einer Richtung durch das Filterelement gefiltert werden, während bei dem Strömen in der anderen Richtung keine Filterung stattfindet. Hierdurch lässt sich ein höherer Reinigungsgrad der Fluide auf der einen Seite der Schnellverbindungskupplung, z.B. geräteseitig erreichen. Auf der Schlepperseite wird diese Reinigung durch ein in der Schlepperhydraulikanlage enthaltenes großes Filterelement gewährleistet.

Eine einfache Anordnung des Filterelementes in rückschlagventilartiger Weise lässt sich dadurch erreichen, dass das Filterelement an seinem einen Ende einen kegelstumpfförmigen Ansatz aufweist, dass im Bereich der im Stecker sich befindlichen Hydraulikleitung ein kegelstumpfförmiger Bereich angeordnet ist, dass der Filter mit seinem kegelstumpfförmigen Ansatz in den kegelstumpfförmigen Ansatz der Hydraulikleitung des Steckers hineinragt, so dass die Mantelflächen der kegelstumpfförmigen Ansätze von Filterelement und Stecker aneinander anliegen.

Ein guter Sitz und Funktionsweise des Filterelementes lässt sich dadurch erreichen, dass das Filterelement mittels eines Federelementes in Richtung des kegelstumpfförmigen Ansatzes des Steckers gedrückt wird.

Eine vorteilhafte Anordnung des Filterelementes ergibt sich dadurch, dass der kegelstumpfförmige Ansatz in der Hydraulikleitung des Steckers auf der dem Ventilelement abgewandten Seite des Steckers angeordnet ist.

Damit das Fluid in der einen Richtung an den Filterelement vorbeiströmen kann, ist vorgesehen, dass das Filterelement in Richtung des Ventilelementes gegen Federkraft von den kegelstumpfförmigen Ansatz in der Hydraulikleitung des Steckers abhebbar ist.

Eine einfache Ausgestaltung des Filterelementes lässt sich dadurch erreichen, dass das Filterelement als poröses Sinterelement ausgebildet ist.

Weitere Einzelheiten der Erfindung sind der Beispielsbeschreibung zu entnehmen. Die Zeichnungen zeigen
- Fig.1: den Stecker der Schnellverbindungskupplung für Hydraulikleitungen in Vorderansicht,
- Fig.2: den Stecker gemäß Fig.1 im Teilschnitt und
- Fig.3: den Stecker in der Darstellungsweise gemäß Fig. 2, wobei das Ventilelement von seinem Ventilsitz abgehoben dargestellt ist.

Die Schnellverbindungskupplung besteht aus der nicht dargestellten Muffe und dem Stecker 1, die in bekannter Weise miteinander kuppelbar sind. Die nicht dargestellten Muffe ist beispielsweise an einem nicht dargestellten Ackerschlepper angeordnet und mit dessen Hydraulikanlage verbunden. Der Stecker 1 ist mit seiner Anschlussverschraubung 2 an dem Ende einer Hydraulikleitung eines an dem nicht dargestellten Ackerschlepper angekoppelten und ebenfalls nicht dargestellten Gerätes angeordnet.

Die Schnellverbindungskupplung ist als Steckverbindungskupplung ausgebildet und wird häufig auch als SVK-Kupplung bezeichnet.

Der Stecker 1 weist das Gehäuse 3 auf. In dem Gehäuse 3 ist eine durchgehende Hydraulikleitung 4 angeordnet. Auf der einen Seite weist der Stecker 1 die Steckkupplung 5 mit dem federbelasteten Ventilelement 6 auf, damit nach dem Entkuppeln des Steckers 1 von der Muffe die Hydraulikleitung 4 durch das Ventilelement 6 verschlossen ist. Dass dem Ventilelement 6 abgewandte Ende des Gehäuses 3 ist in bekannter Weise über die Anschlussverschraubung 2 mit einer nicht dargestellten Hydraulikleitung des Gerätes verbunden.

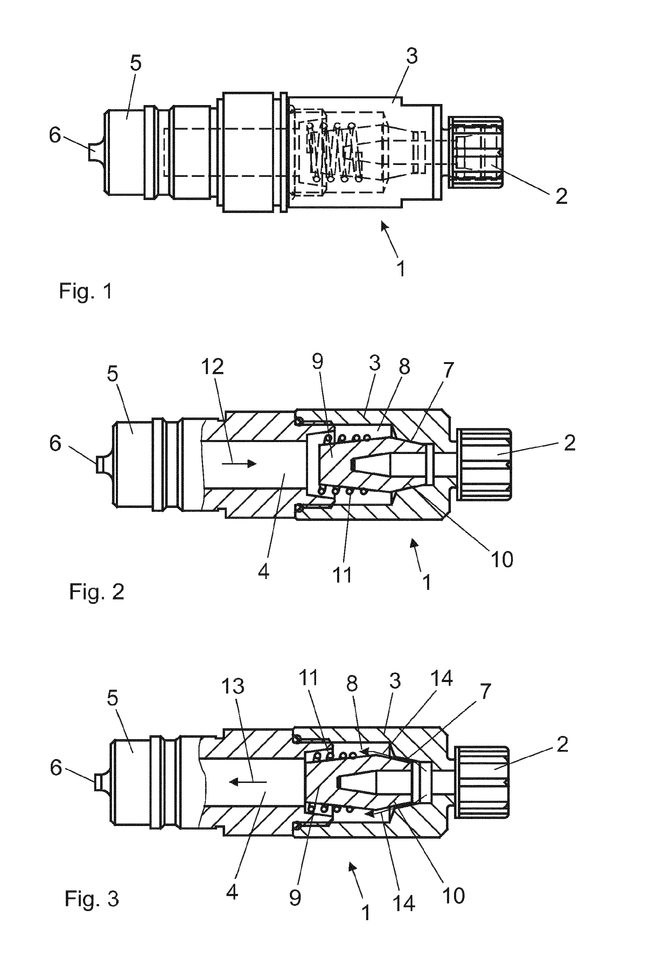

In der Hydraulikleitung 4 des Steckers 1 ist auf die dem Ventilelement 6 abgewandten Seite des Steckers 1 eine Mantelfläche aufweisender kegelstumpfförmiger Ansatz 7 angeordnet. An der Mantelfläche des kegelstumpfförmigen Ansatzes 7 in der Hydraulikleitung 4 schließt sich in Richtung des Ventilelementes ein erweiterter Bereich 8 der Hydraulikleitung 4 an. In diesem erweiterten Bereich 8 der Hydraulikleitung 4 ist ein Filterelement 9 angeordnet. Das Filterelement 9 weist an seinem ein Ende einen einer Mantelfläche aufweisenden kegelstumpfförmigen Ansatz 10 auf. Das Filterelement 9 ragt mit seinem kegelstumpfförmigen Ansatz 10 in den kegelstumpfförmigen Ansatz 7 der Hydraulikleitung 4 des Steckers 1 hinein, so dass die Mantelflächen der kegelstumpfförmigen Ansätze 7 und 10 von Filterelement 9 und Stecker 1 aneinander anliegen. Dem Filterelement 9 ist ein Federelement 11 zugeordnet, welches das Filterelement 9 in Richtung des kegelstumpfförmigen Ansatzes 7 des Steckers 1 drückt. Das Filterelement 9 ist in Richtung des Ventilelementes 6 gegen die Federkraft der Feder 11 von dem kegelstumpfförmigen Ansatz 7 in der Hydraulikleitung 4 des Steckers 1 abhebbar, wie die Fig.3 zeigt. Die Anordnung des Filterelementes 9 in der Hydraulikleitung 4 des Steckers 1 ist rückschlagventilartig ausgestaltet. Somit ist das Filterelement 9 rückschlagventilartig in der Hydraulikleitung 4 des Steckers 1 angeordnet.

Das Filterelement 9 ist als poröses Sinterelement ausgebildet.

Die Funktionsweise des Filterelementes 9 in dem Stecker 1 der Schnellverbindungskupplung ist wie folgt:

Nach dem Kuppeln des Steckers 1 mit der nicht dargestellten Muffe kann das durch die Hydraulikleitung 4 strömende Fluid wahlweise in beide Richtungen strömen. Wenn das Fluid in Richtung 12 von der Schlepperhydraulikanlage zu dem Gerät durch die Hydraulikleitung 4 strömt, sitzt das Filterelement 9 entsprechend Fig.2 fest in seinem Sitz, so dass das Fluid durch das Filterelement 9 strömen muss. Hierdurch wird das Fluid gefiltert und Schmutzpartikel, wenn sie sich in dem Fluid befinden, werden von dem Filterelement 9 zurück gehalten.

Wenn das Fluid von dem Gerät zu der Schlepperhydraulikanlage durch die Hydraulikleitung 4 in Pfeilrichtung 13 zurück strömt, wird das rückschlagventilartig in der Hydraulikleitung 4 angeordnete Ventilelement 9 von den Mantelflächen des kegelstumpfförmigen Ansatzes 7 in der Hydraulikleitung 4 abgehoben, wie Fig.3 zeigt. Dies entspricht der Funktionsweise eines Rückschlagventiles. Somit strömt das Fluid von dem Gerät zwischen der Mantelfläche des kegelstumpfförmigen Ansatzes 7 in der Hydraulikleitung 4 und der Mantelfläche des kegelstumpfförmigen Ansatzes 10 an dem Filterelement 9 in bypassartiger Weise vorbei, wie durch die Pfeile 14 in Fig.3 gezeigt ist. Somit kann das Fluid ungehindert von dem Gerät zu der Schlepperhydraulikanlage durch die Hydraulikleitung 4 an dem Ventilelement 9 vorbei zurück strömen. In diesem Fall findet keine Filterung des Fluides durch das Filterelement 9 statt.

## Patentansprüche

1. Schnellverbindungskupplung für Hydraulikleitungen für die Übertragung von unter Druck stehenden flüssigen Fluiden, wobei die Steckverbindungskupplung zum lösbaren Verbinden von Hydraulikleitungen jeweils einen Stecker (1) und eine Muffe, die miteinander zu kuppeln sind, aufweist, wobei der Stecker (1) und die Muffe jeweils ein die Leitungen (4) verschließende federbelastetes Ventilelement (6) aufweisen, wobei in dem Stecker (1) in dessen Hydraulikleitung (4) ein Filterelement (9) angeordnet ist, **dadurch gekennzeichnet, dass** das Filterelement (9) rückschlagventilartig in der Hydraulikleitung (4) des Steckers (1) angeordnet ist.

2. Schnellverbindungskupplung nach Anspruch 1, **dadurch gekennzeichnet, dass** das Filterelement (9) an seinem einen Ende einen kegelstumpfförmigen Ansatz (10) aufweist, dass im Bereich der im Stecker (1) sich befindlichen Hydraulikleitung (4) ein kegelstumpfförmiger Bereich (7) angeordnet ist, dass das Filterelement (9) mit seinem kegelstumpfförmigen Ansatz (10) in den kegelstumpfförmigen Ansatz (7) der Hydraulikleitung (10) des Steckers (1) hineinragt, so dass die Mantelflächen der kegelstumpfförmigen Ansätze (7, 10) von Filterelement (9) und Stecker (1) aneinander anliegen.

3. Schnellverbindungskupplung nach zumindest einem der vorstehenden Ansprüche, **dadurch gekennzeichnet, dass** das Filterelement (9) mittels eines Federelementes (11) in Richtung des kegelstumpfförmigen Ansatzes (7) der Hydraulikleitung (4) des Steckers (1)gedrückt wird.

4. Schnellverbindungskupplung nach zumindest einem der vorstehenden Ansprüche, **dadurch gekennzeichnet, dass** der kegelstumpfförmige Ansatz (7) in der Hydraulikleitung (4) des Steckers (1) auf der dem Ventilelement (6) abgewandten Seite des Steckers (1) angeordnet ist.

5. Schnellverbindungskupplung nach zumindest einem der vorstehenden Ansprüche, **dadurch gekennzeichnet, dass** das Filterelement (9) in Richtung des Ventilelementes (6) gegen Federkraft von den kegelstumpfförmigen Ansatz (7) in der Hydraulikleitung (4) des Steckers (1) abhebbar ist.

6. Schnellverbindungskupplung nach zumindest einem der vorstehenden Ansprüche, **dadurch gekennzeichnet, dass** das Filterelement (9) als poröses Sinterelement ausgebildet ist.

7. Schnellverbindungskupplung nach zumindest einem der vorstehenden Ansprüche, **dadurch gekennzeichnet, dass** die Schnellverbindungskupplung als Steckverbindungskupplung ausgebildet ist.
